# EUROPEAN PATENT SPECIFICATION

(11) **EP 4 010 257 B1**
(45) Date of publication and mention of the grant of the patent: **11.09.2024**
(21) Application number: 20764452.7
(22) Date of filing: 03.08.2020
(51) Int. Cl.: B65B 69/00, B25J 9/16, B65G 61/00

(54) **LOGISTIC DEVICE**
LOGISTISCHE VORRICHTUNG
DISPOSITIF LOGISTIQUE

(30) Priority: 07.08.2019 IT 201900014328
(43) Date of publication of application: 15.06.2022
(73) Proprietor: Università di Pisa, 56124 Pisa (IT); Fondazione Istituto Italiano di Tecnologia, 16163 Genova (IT)
(72) Inventor: GARABINI, Manolo, I - 19020 Ceprana (La Spezia) (IT); CAPORALE, Danilo, 20137 Milano (IT); SETTIMI, Alessandro, 56124 Pisa (IT); PALLOTTINO, Lucia, 56124 Pisa (IT); BICCHI, Antonio, 54100 Massa (IT); GABELLERI, Chiara, 56122 Pisa (IT); MANNUCCI, Anna, 56122 Pisa (IT); GRIOLI, Giorgio, 56124 Pisa (IT); CATALANO, Manuel Giuseooe, 56121 Pisa (IT); BARBAROSSA, Manuel, 05022 Amelia (Terni) (IT)
(74) Representative: Lunati & Mazzoni S.r.L.
(86) International application number: PCT/IB2020/057324
(87) International publication number: WO 2021/024161

(56) References cited:
- WO-A1-2004/007295
- WO-A1-2011/058456
- WO-A1-93/11043
- US-A1- 2013 017 053
- US-A1- 2015 203 304

## Description

The present invention relates to a logistic device for cutting and conveniently removing film of the type specified in the preamble of the first claim.

Document WO 2004/007295 relates to a process for removing a film packing from a multi-layer stacked load on a pallet. In this document the damage of the products is prevented by providing the mobile support 9 which bears the cutter 10 "with a safety clutch mechanism to avoid a situation in which a blunt or broken blade might lead the cutting mechanism to tear the film 2 and drag it away, with a consequent risk of the load's being tipped over".

Thus, the object of the present invention is identifiable in a device adapted to cut and allow the removal of a film or other layer (hereinafter referred to univocally by the term film) from a pallet or another pack/box, identified hereinafter for simplicity by the term pallet.

As known, in order to stock, block, protect and send products, they are gathered on pallets, which are wrapped, usually partially, in film, preferably extensible film, which adheres to the products.

Consequently, when a product is needed, the operator depalletizes the pallet, i.e. he/she cuts and removes the film freeing the product from the others arranged on the pallet, thus allowing the withdrawal thereof.

The described prior art comprises a few important drawbacks.

In particular, the operations are carried out almost completely manually, which is very time-consuming for the operator.

In particular, the cutting of the film must be carried out using utility knives or other cutting means, which involve significant risks of injury to the operator and/or damage to the product, thus requiring great care, making the operation slow and laborious. It should be noted how such drawbacks have a high negative impact on the profitability of the service and therefore, on the costs of the stocking process and therefore, on the end costs of the product.

In this situation, the technical task underlying the present invention is to conceive a logistic device capable of substantially overcoming at least part of the stated drawbacks.

In the scope of said technical task, it is an important object of the invention to obtain a logistic device, which allows the depalletizing operations to be accelerated without damaging the products or risks to the operator.

It is an object to have a logistic device, which allows the costs of the depalletizing process to be reduced.

The technical task and specified objects are achieved with a logistic device as claimed in the attached claim 1. Preferred embodiments are described in the dependent claims.

The features and advantages of the invention are clarified below by the detailed description of preferred embodiments of the invention, with reference to the accompanying drawings, wherein:
**Fig. 1** shows a true-to-scale logistic device according to the invention;

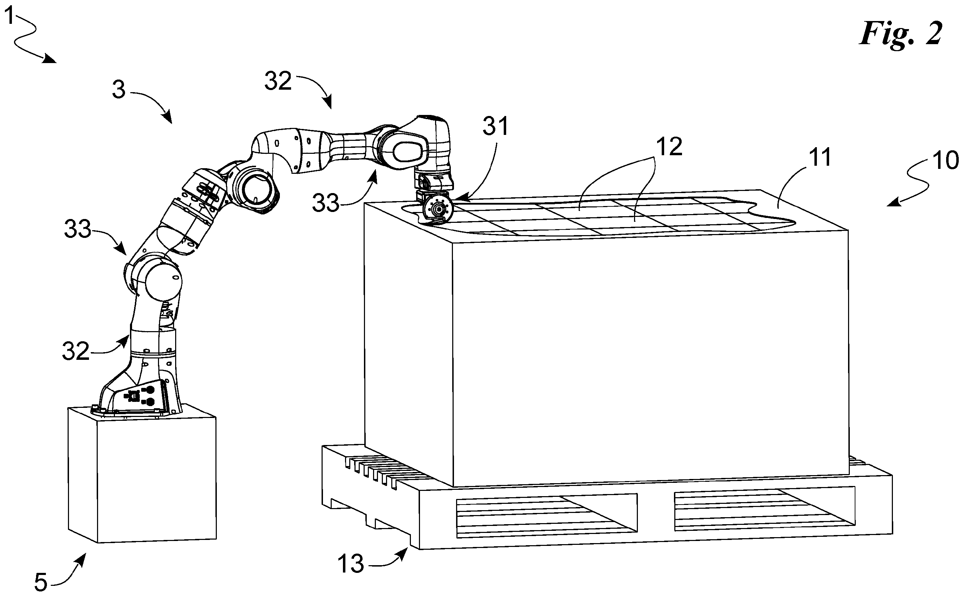

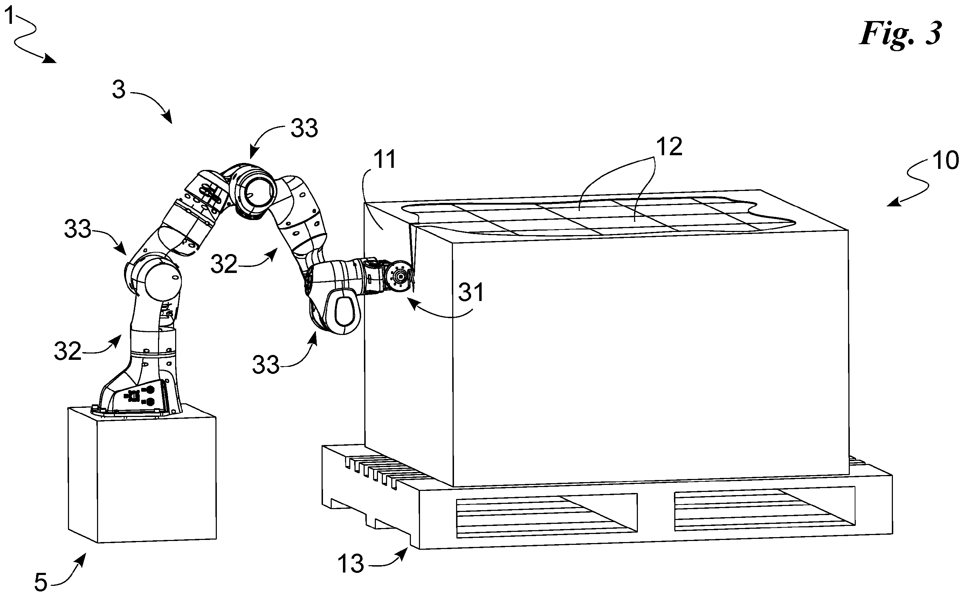

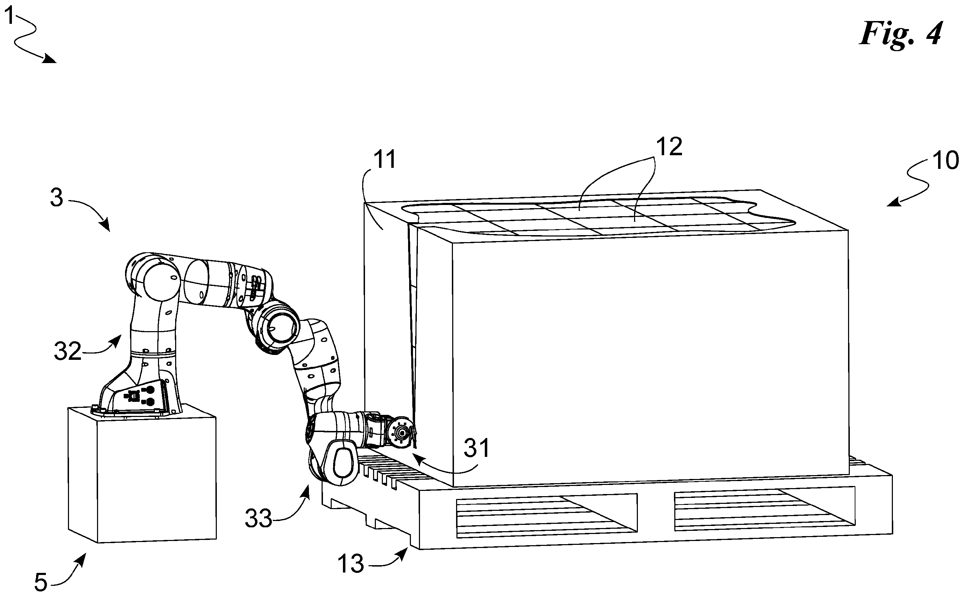

**Figs. 2-4** show a true-to-scale working sequence of the logistic device;
**Fig. 5** presents a true-to-scale assembly of the logistic device according to the invention; and
**Fig. 6** illustrates another example of a true-to-scale logistic device according to the invention.

In the present document, measurements, values, shapes and geometric references (such as perpendicularity and parallelism), when associated with words, such as "about" or other similar terms, such as "almost" or "substantially", shall be understood as except for measurement errors or inaccuracies due to errors of production and/or manufacturing and, above all, except for a slight divergence from the value, measurement, shape or geometric reference with which it is associated. For example, if associated with a value, such terms preferably indicate a divergence of no more than 10% of the value itself.

Furthermore, when terms such as "first", "second", "upper", "lower", "main" and "secondary" are used, they do not necessarily identify an order, relationship priority or relative position, but they can simply be used to distinguish different components more clearly from one another.

Unless otherwise stated, the measurements and data contained in this text shall be considered as performed in ICAO International Standard Atmosphere (ISO 2533). Unless otherwise specified, as is apparent from the following discussions, terms such as "processing", "computing", "determination", "calculation", or similar, are considered to refer to the action and/or processes of a computer or similar electronic calculation device, which manipulates and/or transforms data represented as physical, such as electronic magnitudes of registers of an IT system and/or memories, other data similarly represented as physical quantities within IT systems, registers or other information memorization, transmission or display devices.

With reference to the Figures, the logistic device according to the invention is globally denoted with numeral **1.**

It is adapted to be used for cutting and, in particular, for removing a film **11** from a pallet **10,** allowing the products **12** placed on the pallet 10 to be removed.

The pallet 10 can comprise one or more products 12 and at least a film 11, at least partially wrapping the products 12. Optionally, it can comprise a platform **13** on which the products 12 are placed and conveniently, at least partially wrapped by the film 11.

The film 11 can comprise one or more layers of film, usually a polymeric film (such as polyethylene), preferably of the extensible type.

The logistic device 1, which will be described better below, is automatic, i.e. able to operate without the support/control of an inspector.

The logistic device 1 can comprise an acquisition apparatus **2** adapted to make at least one acquisition, conveniently, automatically, of the position and size of the pallet 11 and thus, of the film 11, preferably of the one or more products 12 and, if present, of the platform 13.

The acquisition apparatus 2 allows the positioning of the pallet 10 with respect to the logistic device 1 and how the film 11 is wrapped around the products 12, as described below. The acquisition apparatus 2 comprises at least one depth sensor, which provides a cloud of dots of the scene from which, as described below, at least one reconstruction of the pallet 10 is made, to determine the initial cutting point.

In detail, the acquisition apparatus 2 can be optical and thus, the acquisition can comprise several images of the pallet 10. Thus, it can comprise at least one optical sensor 21 (for example, a camera) for filming the pallet 10 and, in particular, several optical sensors 21 (identifying said depth sensor), preferably adapted to film the pallet 10 from different angles, allowing a spatial/three-dimensional reconstruction i.e. a 3D image of the pallet, as described below.

The acquisition apparatus 2 can comprise a Kinect^{®}.

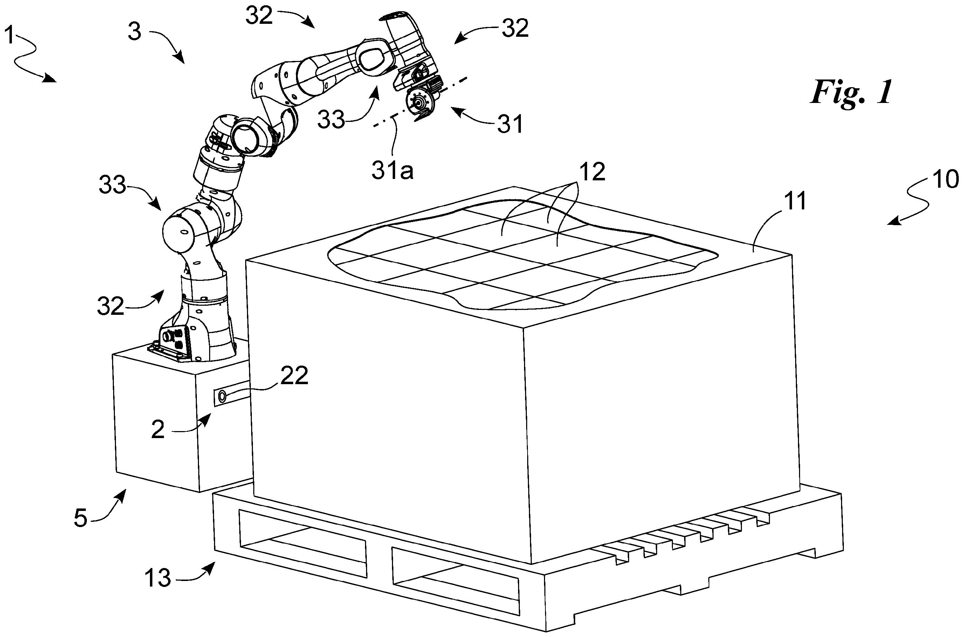

Fig. 1 shows an illustrative example of the acquisition apparatus 2. Note that the position of the acquisition apparatus is such as to allow the acquisition of at least the surface in view of the pallet, i.e. not resting on a support plane of the pallet 10. Note how the acquisition apparatus 2 allows the positioning of the pallet 10 with respect to the logistic device 1 and how the film 11 is wrapped around the products 12, as described below.

The logistic device 1 can comprise a manipulator **3,** comprising cutting means **31** for cutting the film 11; and a control unit for controlling at least the manipulator 3.

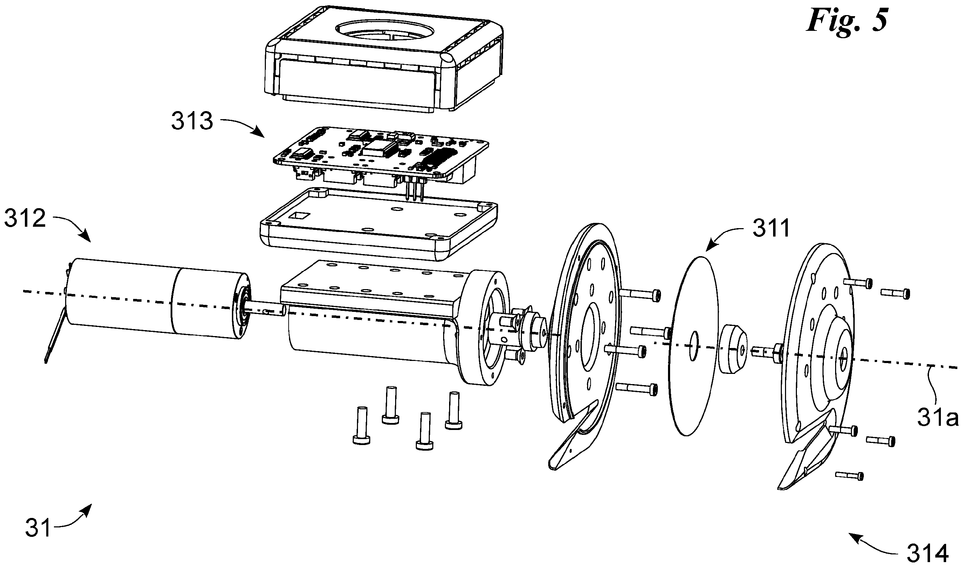

The cutting means 31, as highlighted in Fig. 5, can be adapted to cut the film hot or mechanically. Preferably, they comprise a blade **311** adapted to cut the film 11. Preferably, the blade 311 is circular and the cutting means 31 comprise a motor **312,** conveniently an electric motor, which is adapted to rotate the blade 311 about a rotation axis **31a;** and preferably a card **313** for controlling the motor 312.

In order to make the cut safely (i.e. cutting only the film 11 avoiding damage to the products 12); the cutting means can comprise a casing **314** defining a compartment, partially housing the blade 31, which thus has a portion in view of the wire able to make the cut.

Thus, the casing 314 can be identified in a circular/cylindrical body having an incision **314a,** which is conveniently tangential to the rotation axis 31a, defining said visible portion.

The casing 314 can comprise a slide **314b** defining an extension of the cut 314a, adapted to direct the film 11 towards the portion in view of the blade 311.

The slide 314b has a prevalent development axis tangential to the rotation axis 31a and a tapered section along said prevalent development axis. In particular, it has a maximum section proximal to the cut 314b (i.e. to the blade 311) and a minimum section distal from the cut 314b (i.e. from the blade 311), favouring the separation of the film 11 from the products 12 and thus the safe cutting of the film 11.

The manipulator 3 can be adapted to move the cutting means 31 with respect to the pallet 10 and, in particular, to the film 11, so as to cut said film 11.

The manipulator 3 can be identified in a robotic arm.

It can comprise one or more rigid bodies **32,** identifiable in section bars, which are optionally telescopic, and one or more mechanical joints **33,** adapted to move and, to be precise, mutually rotate the rigid bodies 32, conveniently, independently of each other.

Between the rigid bodies 32, a final rigid body is identifiable, to which the cutting means 31 are constrained and, optionally, a final mechanical joint constraining the final rigid body to at least one rigid body 32 upstream thereof. Optionally, the mechanical arm 3 can comprise at least a hinge, preferably a motorized hinge, adapted to define at least a rotation axis between the cutting means 31 and the final rigid body.

The mechanical joints 33 are adapted to move, and, to be precise, mutually rotate the rigid bodies 32, varying the spreading angle between two adjacent rigid bodies 32.

The mechanical joints 33 rotate the rigid bodies 32 according to an inverse kinematics or direct kinematics. Thus, it is specified that, although not expressly stated, each movement of the manipulator 3 described in this document is determined according to an inverse kinematics or direct kinematics.

The expression inverse kinematics defines a trajectory in the operating space, i.e. the calculation of the path of the terminal member of the manipulator 3 (identifiable in the cutting means 31). Therefore, the control unit determines the position, speed and acceleration of the single mechanical joints 33, so as to have said path of the terminal member of the manipulator 3.

The expression direct kinematics identifies the calculation of a trajectory in the joint space, in which the position, speed and acceleration of the single mechanical joints 32 are determined and not the path of the terminal member. Consequently, the path of the terminal member of the manipulator 3 is a consequence of the position, speed and acceleration of the mechanical joints 33.

Each joint 33 is adapted to rotate at least the rigid body 32 following it according to the kinematic chain defining a rotation axis, which is transversal and, substantially, almost perpendicular to the axis of preferred extension of the rigid body 32. Preferably, a joint 33 defines two rotation axes, which are almost transversal and, more preferably, perpendicular to each other.

The mechanical joints 33 can be of a various type, motorized or not motorized, such as - by way of a non-limiting example - rotoidal, prismatic, ball, helical, cylindrical and hinge joints.

Each mechanical joint 33 can comprise a servomotor i.e. an electric motor provided with an encoder, adapted to measure the rotation angle between the rigid bodies 33 given by the motor and constantly maintain such angle.

Advantageously, the manipulator 3 has a controllable compliance. Therefore, one or more mechanical joints 33 can be with varying compliance. Joints with varying compliance are described, for example, in US2012096973 and ITPI20110057. The manipulator 3 can comprise one or more sensors adapted to detect the forces between the pallet 10 and the manipulator 3 (in particular on the cutting means 31). The mechanical joints 33 can define at least two compliances, which are different from each other per module and\or direction of application as described below.

In particular, the sensors are adapted to detect the forces, which one or more objects 12 apply to the cutting means 31, conveniently, at the casing 314 and specifically, at the outer profile of the casing 314

Alternatively or additionally, the sensors are adapted to detect the forces, which the film 11 applies to the cutting means 31, preferably at the slide 314b and in particular, at the sliding surface of the film 11 along the slide 314b.

Said sensors are adapted to detect the intensity of said forces.

Said sensors are adapted to detect the direction and, conveniently, the line of said forces.

The control unit is in data connection with at least the manipulator 3 and the acquisition apparatus 2.

Thus, it is able to command, conveniently, automatically, the operation of the manipulator 3 (movements, compliance, etc.) depending on the acquisition of the acquisition apparatus 2.

The control unit can comprise a memory containing the information necessary for controlling the manipulator 3.

Said memory can comprise an arm database adapted to allow the control unit to control the manipulator 3 and in particular know the spatial arrangement thereof. The arm database can comprise at least the data relating to the compliance (i.e. to the joints 33) allowing the control unit to vary the compliance of the manipulator 3 (thus of the cutting means 31 with respect to the pallet 10).

The memory can comprise a film database associating, with one or more films, the specific techniques of the film itself, such as friction, for example, conveniently dynamic friction, and the force needed for the cutting thereof.

The memory can comprise a product database associating, with each product, the specific techniques of the product itself, such as the maximum force applicable thereto, for example, without damaging it.

The control unit is adapted to control, as a function of the acquisition made by the apparatus 2, the trajectory of the cutting means 31, which are brought into contact with the pallet 10 and can cut the film 11 preferably safely.

Thus, the control unit is able to control, conveniently automatically, the operation of the acquisition apparatus 2 and thus, the execution of the acquisition.

Based on the acquisition, it defines at least one reconstruction, preferably a three-dimensional reconstruction, of the pallet 10. In particular, based on the acquisition, it defines a nominal reconstruction, which is preferably a three-dimensional reconstruction and at least a probable reconstruction, which is preferably a three-dimensional reconstruction (described below).

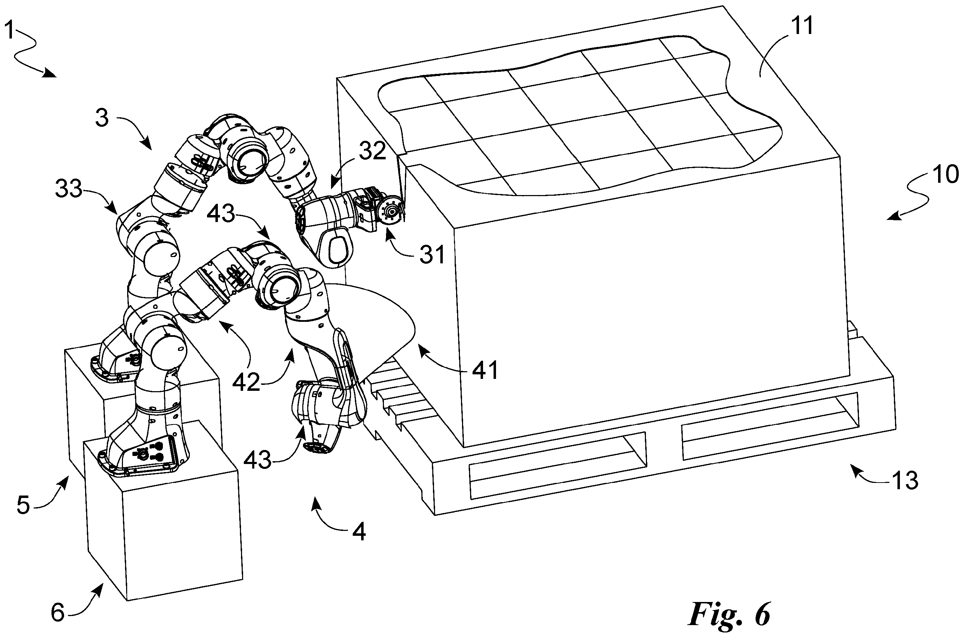

The reconstruction can represent an image illustrating the profile of the pallet 10. The logistic device 1 can comprise a supplementary manipulator **4** (Fig. 6).

The supplementary manipulator 4 can comprise distancing means **41** for distancing the film 11 from the products 12.

The distancing means 41 can be suction means and thus comprise an extractor hood, adapted to be placed close to the film 11.

The supplementary manipulator 4 can be identified in a robotic arm. It can comprise one or more supplementary rigid bodies **42,** identifiable in section bars, which are optionally telescopic section bars, and one or more supplementary mechanical joints **43,** which are adapted to move, and to be precise, mutually rotate the rigid bodies 32, conveniently independently of each other.

The supplementary rigid bodies 42 are substantially similar to the rigid bodies 32 whose description is referred to.

The supplementary mechanical joints 43 are substantially similar to the mechanical joints 33 whose description is referred to.

The supplementary manipulator 4 can be controlled by the control unit.

The supplementary manipulator 4 can be controlled by the control unit as a function of the manipulator 3, so as to avoid interference between the two manipulators 3 and 4 and thus have the distancing means again in view of the film 11 without the manipulator 3 overlapping between the means 41 and the film 11.

For such purpose, the memory of the control unit can comprise the information necessary for controlling the supplementary manipulator 4.

Said memory can comprise an arm database, adapted to allow the control unit to control the supplementary manipulator 4 and, in particular, know the spatial arrangement thereof.

The logistic device 1 can comprise a support structure **5.**

The support structure 5 is adapted to sustain the manipulator 3 and, in some cases, the acquisition apparatus 2. Alternatively, the acquisition apparatus 2 can be arranged on a structure, which is independent of the support structure 5 and thus of the arm 3.

The support structure 5 can be movable and thus identifiable in a trolley, preferably with driverless automatic operation and controllable by the control unit.

The support structure 5 can be adapted to sustain the supplementary manipulator 4. Alternatively, the device 1 can comprise a supplementary support structure **6** for the supplementary manipulator 4.

Finally, the logistic device 1 can comprise an interface, adapted to allow a data exchange between the operator and the logistic device 1 itself.

In particular, the interface can comprise a keyboard, a touch screen or another data input means, adapted to allow an operator to enter data in the logistic device 1. Alternatively or additionally, the interface can comprise a printer, a screen or another data output means adapted, for example, to allow an operator to monitor the operation of the logistic device 1.

The operation of the logistic device 1, described previously in structural terms, defines an innovative logistic method.

Said innovative logistic method is adapted to be controlled by the control unit and thus, carried out automatically by the logistic device 1 without the support of an operator (optionally, at most once the start command of the method has been given). The logistic method makes the cut and subsequently the removal of a film 11 wrapping at least the products 12 of a pallet 10.

The logistic method comprises an initial setting step.

In the setting step, the film 11 present on the pallet 10 is selected, conveniently by an operator, from the film database and the one or more products 12 present on the pallet 10 is selected from the product database.

The setting step can be the only step carried out by an operator.

The logistic method comprises a step of detecting at least one pallet 10, wherein the acquisition apparatus 2, conveniently controlled by the control unit, makes an acquisition (in particular, an optical acquisition) of the pallet 10 and, thus, based on such acquisition, at least one reconstruction of the pallet 10 reproduced is defined, conveniently by the control unit.

In detail, in the detection step the unit defines the position and size of the pallet 10 and then makes a reconstruction of the pallet 10 as a function of the acquisition. The detection step can be carried out and controlled automatically by the control unit.

In this step, based on the acquisition, the control unit defines a nominal reconstruction and at least one and, in particular, several probable reconstructions of the pallet 10 reproduced.

Each reconstruction is identified by a series of dots, identified by coordinates, which are defined with respect to a single triaxial Cartesian system of reference (X, Y, Z). In particular, the presence of a nominal reconstruction and one or more probable reconstructions is determined by the fact that the acquisition apparatus 2 has an acquisition error\imprecision, which makes it impossible to identify, with precision and certainty, the true profile of the pallet 10, but only a set of possible dots/profiles of a possible representation of the pallet 10. Consequently, the control unit extrapolates, from such data, a nominal reconstruction identifying the most probable profile of the pallet 10 and one or more probable reconstructions identifying all of the possible profiles of the pallet 10.

The nominal reconstruction is usually interposed between the probable reconstructions.

Such detection step is known in itself. In fact, it is described, for example, by G. Garibotto, S. Masciangelo, M. Ilic, and P. Bassino in "Service robotics in logistic automation: Robolift: vision based autonomous navigation of a conventional fork-lift for pallet handling," (pages 781-786); or by R. Varga and S. Nedevschi in "Robust pallet detection for automated logistics operations." (pages 470-477).

The logistic method comprises an identification step of the film 11, i.e. the surface of the pallet covered by the film 11.

In detail, the position of the film 11 in the reconstruction and, in detail, in each reconstruction is defined in the identification step.

The identification step can be carried out and controlled automatically by the control unit.

The identification step can be manual, i.e. carried out by the operator, who, by means of the interface, identifies the film 10 on the preferably nominal reconstruction.

Alternatively or additionally, the identification step can be automatic and thus carried out by the control unit. It can be carried out by exploiting the preceding acquisition, which, by highlighting a surface reflectance variation, for example, allows the film 11 to be identified. Examples of the identification step are described by G. Baechler, I. Dokmanic, L. Baboulaz, and M. Vetterli in "Accurate recovery of a specularity from a few samples of the reflectance function" (pages 1596-1600); or by M. Aittala, T. Weyrich, and J. Lehtinen in "Practical svbrdf capture in the frequency domain," (pages 110:1-110:12).

The logistic method comprises a planning step of the cutting trajectory, i.e. the trajectory along which the cutting means 31 are moved to cut the film 11, and, in particular the function of varying the compliance of the cutting means 31.

The planning step can be carried out and controlled automatically by the control unit. In the planning step, the control unit defines a cutting trajectory, adapted to allow the cutting means 31 to cut the film 11 as a function of the acquisition and in particular of the position and reconstruction of the pallet and, specifically, of the identification of the film 10.

The cutting trajectory is substantially parallel to the pallet 10 and in particular, to the conveniently nominal reconstruction.

Thus, the cutting trajectory can be identified in a line in the case of a pallet 10 with film 11 only wrapping the side; or in the other cases consisting of two or more lines, which, in the mutual contact point thereof, imposes a rotation of the means 31. Note that the control unit can comprise a first part of the cutting trajectory, which is adapted to bring the blade 311 into contact with only the film 11. Specifically, said first part is such as to allow the manipulator 3 to bring the minimum section of the slide into contact with a free edge of the film 11 and cause the film 11 to slide along the slide 314b, bringing it into contact with the blade 311.

The planning step can comprise a sub-step of estimating the discrepancy of the reconstruction, i.e. the differences between the probable and nominal reconstructions.

Based on the difference between the probable and nominal reconstructions, the control unit determines, for each point of the nominal reconstruction, the minimum value taken by the point in the probable reconstructions and the value in the nominal reconstruction, conveniently along each axis of the system of reference. More specifically, for each point of the nominal reconstruction, the control unit determines a minimum error with respect to the nominal reconstruction.

Additionally or alternatively, the control unit can determine, for each point of the nominal reconstruction, the maximum value taken by the point in the probable reconstructions, conveniently along each axis of the system of reference. More specifically, for each point of the nominal reconstruction, the control unit determines a maximum error as the difference between said maximum value with respect to the nominal reconstruction.

Preferably, the maximum and minimum value of each point and the maximum and minimum error are determined at least along a direction substantially perpendicular to the cutting trajectory and to the pallet 10.

Thus, the planning step can comprise a first calculation sub-step, conveniently after the estimate sub-step.

In the first calculation sub-step, for each point of the conveniently nominal reconstruction, the control unit determines a first compliance, which is substantially parallel to the cutting trajectory. Thus, the unit defines whether and how to vary the first compliance (conveniently at the joints 33) while the cutting means 31 are moved along the cutting trajectory

The first compliance defines the first force, i.e. the maximum force applicable by the manipulator 3 and in particular by the cutting means 31 along the cutting trajectory. The first compliance is determined as a function of the first force, which is determined, in turn, as a function of the characteristics of the film 11 (resistance to cutting and friction).

Thus, the planning step can comprise a second calculation sub-step, conveniently after the estimate sub-step.

It should be noted how the compliance (specifically, first and\or second) can be by the control unit imposing said compliance on at least one mechanical joint 33. For example, the control unit can impose said compliance by regulating the compliance of only one mechanical joint 33 and\or of all of the mechanical joints 33.

The calculation sub-steps can be carried out simultaneously.

In the second calculation sub-set, for each point of the conveniently nominal reconstruction, the control unit determines a second force, which is substantially perpendicular to the cutting trajectory and to the pallet 10 (specifically, to the film 11 at the point in question) and thus a second compliance along said direction perpendicular to the cutting trajectory and to the pallet 10. Thus, in this sub-set, the unit defines whether and how to vary the second compliance (conveniently at the joints 33) while the cutting means 31 are moved along the cutting trajectory

The second compliance defines the first force, i.e. the maximum force applicable by the manipulator 3 and in particular, by the cutting means 31 on the products 12 without damaging them.

Such second force and thus the second compliance depend on the differences between the probable and nominal reconstructions along a direction, which is substantially perpendicular to the cutting trajectory and to the pallet 10. In particular, they are determined on the basis of the maximum error and minimum error along a direction, which is almost perpendicular to the cutting trajectory and to the pallet 10. More specifically, the second force, and thus the second compliance depend on the minimum error along a direction, which is almost perpendicular to the cutting trajectory and to the pallet 10.

Preferably, the second force and thus, the second compliance are determined depending on said error, conveniently the minimum error, and on the maximum force applicable on the product, which is known based on the aforesaid product database.

The second compliance can be substantially at least equal and, specifically, substantially greater than the first compliance.

The logistic method comprises a step of cutting the film 11.

The cutting step can be carried out and controlled automatically by the control unit. The cutting and planning steps can be carried out simultaneously.

In this step, based on the control unit, the manipulator 3 moves moving the cutting means 31 and in particular along the blade 311, along the cutting trajectory varying the compliance and thus the force applied by the means 31 based on what was determined in the planning step.

Specifically, in the cutting steps, the manipulator 3, conveniently controlled by the control unit, moves the cutting means 31 with respect to the pallet 10 (and thus to the film 11) conveniently defining, at one or more of the mechanical joints 33, a first compliance along a direction, which is substantially parallel to the cutting trajectory and a second compliance, along a direction, which is substantially perpendicular to the cutting trajectory, which is substantially greater than the first compliance. Thus, the manipulator cuts only the film 11.

The logistic method comprises a step of distancing the cut film 11.

The distancing step can be carried out and controlled automatically by the control unit.

The distancing and planning steps can be carried out simultaneously.

In this step, the supplementary manipulator 4 sucks up and then distances the film 11 from the pallet 10, keeping the film 11 tight, thus facilitating the cut.

The cutting device 1 according to the invention achieves important advantages.

In fact, the logistic device 1 and thus, the method actuated thereby, can be carried out, conveniently almost completely automatically, without the aid and/or supervision of an operator (optionally notwithstanding the setting step).

The logistic device 1 and the method make the distancing of the film 11 from the pallet automatic/autonomous, thus, automating one of the most complex, laborious and risky operations for a depalletizing operator.

In particular, the device 1 allows the film to be cut quickly and without damaging the product 12 significantly reducing the costs of the operation.

The invention is susceptible of variations falling within the scope of the inventive concept defined by the claims. In such scope, all of the details can be replaced by equivalent elements and any materials, shapes and sizes can be used.

## Claims

1. A logistic device (1) for removing the protective film (11) of a pallet (10) or similar; said pallet (10) comprising at least one product (12) and said film (11) at least partially wrapping said product (12); said logistic device (1) being **characterized in that** it comprises
- an acquisition apparatus (2) adapted to make at least an acquisition of the position and size of said pallet (10);
- a manipulator (3) comprising cutting means (31) for cutting said film (11) and adapted to move said cutting means (31);
- a control unit adapted to control the execution of
∘ a detection step, in which said acquisition apparatus (2) makes an acquisition of said pallet (10) and wherein said control unit defines the position and size of said pallet (10) and then makes a reconstruction of said pallet (10);
∘ an identification step, in which the position of said film (11) is defined in said reconstruction;
∘ a planning step, in which, depending on said position and said reconstruction of said film and of said position of said film (11) in said reconstruction, said control unit defines a cutting trajectory, which is adapted to allow said cutting means (31) to cut said film (11);
∘ a cutting step, in which said cutting means (31) are moved along said cutting trajectory, to cut said film (11).
and **in that**
- said control unit defines, by said cutting means (31) a first compliance along a direction substantially parallel to said cutting trajectory and a second compliance along a direction substantially perpendicular to said cutting trajectory; said second compliance is substantially greater than said first compliance so as to cut said film (11) without damaging said product (12); and
- in said cutting step, said control unit commands said manipulator (3) to move said cutting means (31) and thus cut said film (11) having said first compliance and said second compliance.

2. The logistic device (1) according to claim 1, wherein, based on said acquisition, said control unit defines, for said pallet (10), a nominal reconstruction and at least a probable reconstruction; and wherein said control unit defines said movement and said compliance of said manipulator (3) as a function of the discrepancy between said reconstructions.

3. The logistic device (1) according to at least one preceding claim, wherein said control unit defines, for said cutting means (31), a cutting trajectory substantially parallel to said pallet (10), a first compliance along a direction substantially parallel to said cutting trajectory and a second compliance along said direction substantially perpendicular to said cutting trajectory and to said pallet (10).

4. The logistic device (1) according to the preceding claim, wherein said control unit defines said second compliance as a function of the difference between said reconstructions along a direction substantially perpendicular to said cutting trajectory and to said pallet (10).

5. The logistic device (1) according to at least one preceding claim, wherein said acquisition apparatus (2) is an optical acquisition apparatus.

6. A logistic method used with a logistic device (1) according to at least one preceding claim and **characterized in that** it comprises
- a detection step for detecting said pallet (10), in which said acquisition apparatus (2) makes an acquisition of said pallet (10) and said control unit defines the position and size of said pallet (10) and then makes a reconstruction of said pallet (10);
- an identification step, in which the position of said film (11) is defined in said reconstruction;
- a planning step, in which, depending on said position and said reconstruction of said film and of said position of said film (11) in said reconstruction, said control unit defines a cutting trajectory, which is adapted to allow said cutting means (31) to cut said film (11);
- a cutting step, in which said cutting means (31) are moved along said cutting trajectory
and **in that**
- in said planning step, said control unit defines, for said cutting means (31), a first compliance along a direction substantially parallel to said cutting trajectory and a second compliance along said direction substantially perpendicular to said cutting trajectory; said second compliance is substantially greater than said first compliance so as to cut said film (11) without damaging said product (12); and
- in said cutting step, in which said control unit commands said manipulator (3) to move said cutting means (31) and thus cut said film (11) having said first compliance and said second compliance.

7. The logistic method according to the preceding claim, wherein the function of varying the compliance of said cutting means (31) along said cutting trajectory is defined in said planning step; and wherein, said cutting step is adapted to allow said cutting means (31) to cut said film (11).

8. The logistic method according to at least one claim 7-8, wherein a nominal reconstruction and at least a probable reconstruction of said pallet (10) is defined in said detection step as a function of said acquisition.

9. The logistic method according to the preceding claim, wherein a first compliance is defined in said planning step along a direction substantially parallel to said cutting trajectory and a second compliance along a direction substantially perpendicular to said cutting trajectory and to said pallet (10); and wherein said second compliance depends on the difference between said reconstructions along said direction substantially perpendicular to said cutting trajectory and to said pallet (10).

## Patentansprüche

1. Logistische Vorrichtung (1) zum Entfernen der Schutzfolie (11) einer Palette (10) oder ähnlich; wobei die Palette (10) mindestens ein Produkt (12) und die Folie (11) umfasst, die das Produkt (12) teilweise einwickelt; wobei die logistische Vorrichtung (1) **dadurch gekennzeichnet ist, dass** sie umfasst
- einen Erfassungsapparat (2), der eingerichtet ist, mindestens eine Erfassung der Position und Größe der Palette (10) zu erstellen;
- einen Manipulator (3) umfassend Schneidmittel (31) zum Schneiden der Folie (11) und der eingerichtet ist, die Schneidmittel (31) zu bewegen;
- eine Steuereinheit, die eingerichtet ist, die Durchführung der folgenden Schritte zu steuern:
∘ einen Erkennungsschritt, in dem der Erfassungsapparat (2) eine Erfassung der Palette (10) erstellt und wobei die Steuereinheit die Position und Größe der Palette (10) definiert und dann eine Rekonstruktion der Palette (10) erstellt;
∘ einen Identifizierungsschritt, in dem die Position der Folie (11) in der Rekonstruktion definiert wird;
∘ einen Planungsschritt, in dem die Steuereinheit, abhängig von der Position und der Rekonstruktion der Folie und der Position der Folie (11) in der Rekonstruktion, eine Schneidbahn definiert, die eingerichtet ist, den Schneidmitteln (31) zu ermöglichen, die Folie (11) zu schneiden;
∘ einen Schneidschritt, in dem die Schneidmittel (31) entlang der Schneidbahn bewegt werden, um die Folie (11) zu schneiden; und dass
- die Steuereinheit durch die Schneidmittel (31) eine erste Anpassung entlang einer Richtung, die im Wesentlichen parallel zur Schneidbahn ist, definiert und eine zweite Anpassung in einer Richtung, die im Wesentlichen senkrecht zur Schneidbahn ist, definiert; wobei die zweite Anpassung im Wesentlichen größer als die erste Anpassung ist, sodass die Folie (11) geschnitten wird, ohne das Produkt (12) zu beschädigen; und
- in dem Schneidschritt, in dem die Steuereinheit dem Manipulator (3) befehlt, die Schneidmittel (31) zu bewegen und somit die Folie (11) mit der ersten Anpassung und der zweiten Anpassung zu schneiden.

2. Logistische Vorrichtung (1) nach Anspruch 1, wobei die Steuereinheit basierend auf der Erfassung eine nominelle Rekonstruktion für die Palette (10) und mindestens eine wahrscheinliche Rekonstruktion definiert; und wobei die Steuereinheit die Bewegung und die Anpassung des Manipulators (3) in Abhängigkeit von der Diskrepanz zwischen den Rekonstruktionen definiert.

3. Logistische Vorrichtung (1) nach mindestens einem vorhergehenden Anspruch, wobei die Steuereinheit eine Schneidbahn für die Schneidmittel (31) definiert, die im Wesentlichen parallel zur Palette (10) ist, eine erste Anpassung entlang einer Richtung, die im Wesentlichen parallel zur Schneidbahn ist, und eine zweite Anpassung entlang der Richtung, die im Wesentlichen senkrecht zur Schneidbahn und zur Palette (10) ist.

4. Logistische Vorrichtung (1) nach dem vorhergehenden Anspruch, wobei die Steuereinheit die zweite Anpassung in Abhängigkeit von dem Unterschied zwischen den Rekonstruktionen entlang einer Richtung definiert, die im Wesentlichen senkrecht zur Schneidbahn und zur Palette (10) ist.

5. Logistische Vorrichtung (1) nach mindestens einem vorhergehenden Anspruch, wobei der Erfassungsapparat (2) einen optischen Erfassungsapparat ist.

6. Logistisches Verfahren, das mit einer logistischen Vorrichtung (1) nach mindestens einem vorhergehenden Anspruch verwendet wird und **dadurch gekennzeichnet ist, dass** es umfasst:
- einen Erkennungsschritt zum Erkennen der Palette (10), in dem der Erfassungsapparat (2) eine Erfassung der Palette (10) erstellt und die Steuereinheit die Position und Größe der Palette (10) definiert und dann eine Rekonstruktion der Palette (10) erstellt;
- einen Identifizierungsschritt, in dem die Position der Folie (11) in der Rekonstruktion definiert wird;
- einen Planungsschritt, in dem die Steuereinheit, abhängig von der Position und der Rekonstruktion der Folie und der Position der Folie (11) in der Rekonstruktion eine Schneidbahn definiert, die eingerichtet ist, den Schneidmitteln (31) zu ermöglichen, die Folie (11) zu schneiden;
- einen Schneidschritt, in dem die Schneidmittel (31) entlang der Schneidbahn bewegt werden; und dass
- die Steuereinheit in dem Planungsschritt eine erste Anpassung für die Schneidmittel (31) entlang einer Richtung, die im Wesentlichen parallel zur Schneidbahn ist, und eine zweite Anpassung entlang der Richtung, die im Wesentlichen senkrecht zur Schneidbahn ist, definiert; wobei die zweite Anpassung im Wesentlichen größer als die erste Anpassung ist, sodass die Folie (11) geschnitten wird, ohne das Produkt (12) zu beschädigen; und
- in dem Schneidschritt, in dem die Steuereinheit dem Manipulator (3) befehlt, die Schneidmittel (31) zu bewegen und somit die Folie (11) mit der ersten Anpassung und der zweiten Anpassung zu schneiden.

7. Logistisches Verfahren nach dem vorhergehenden Anspruch, wobei die Funktion zur Änderung der Anpassung der Schneidmittel (31) entlang der Schneidbahn in dem Planungsschritt definiert wird; und wobei der Schneidschritt eingerichtet ist, den Schneidmitteln (31) zu ermöglichen, die Folie (11) zu schneiden.

8. Logistisches Verfahren nach mindestens einem der Ansprüche 7-8, wobei in dem Erkennungsschritt eine nominelle Rekonstruktion und mindestens eine wahrscheinliche Rekonstruktion der Palette (10) in Abhängigkeit von der Erfassung definiert wird.

9. Logistisches Verfahren nach dem vorhergehenden Anspruch, wobei eine erste Anpassung in dem Planungsschritt entlang einer Richtung, die im Wesentlichen parallel zur Schneidbahn ist, definiert wird und eine zweite Anpassung entlang einer Richtung, die im Wesentlichen senkrecht zur Schneidbahn und zur Palette (10) ist, definiert wird; und wobei die zweite Anpassung von dem Unterschied zwischen den Rekonstruktionen entlang der Richtung abhängt, die im Wesentlichen senkrecht zur Schneidbahn und zur Palette (10) ist.

## Revendications

1. Dispositif logistique (1) pour retirer le film protecteur (11) d'une palette (10) ou similaire; ladite palette (10) comprenant au moins un produit (12) et ledit film (11) enroulant partiellement ledit produit (12); ledit dispositif logistique (1) étant **caractérisé en ce qu'il** comprend
- un appareil d'acquisition (2) adapté pour effectuer au moins une acquisition de la position et de la taille de ladite palette (10);
- un manipulateur (3) comprenant des moyens de découpe (31) pour couper ledit film (11) et adapté pour déplacer lesdits moyens de découpe (31);
- une unité de contrôle adaptée pour contrôler l'exécution de
∘ une étape de détection, dans laquelle ledit appareil d'acquisition (2) effectue une acquisition de ladite palette (10) et dans laquelle ladite unité de contrôle définit la position et la taille de ladite palette (10) et puis effectue une reconstruction de ladite palette (10);
∘ une étape d'identification, dans laquelle la position dudit film (11) est définie dans ladite reconstruction;
∘ une étape de planification, dans laquelle, en fonction de ladite position et de ladite reconstruction dudit film et de ladite position dudit film (11) dans ladite reconstruction, ladite unité de contrôle définit une trajectoire de découpe, qui est adaptée pour permettre auxdits moyens de découpe (31) de couper ledit film (11);
∘ une étape de découpe, dans laquelle lesdits moyens de découpe (31) sont déplacés le long de ladite trajectoire de découpe pour couper ledit film (11) et **en ce que**
- ladite unité de contrôle définit, par lesdits moyens de découpe (31) une première compliance dans une direction sensiblement parallèle à ladite trajectoire de découpe et une deuxième compliance dans une direction sensiblement perpendiculaire à ladite trajectoire de découpe; ladite deuxième compliance est sensiblement plus grande que ladite première compliance de manière à couper ledit film (11) sans endommager ledit produit (12); et
- dans ladite étape de découpe, ladite unité de contrôle commande ledit manipulateur (3) pour déplacer lesdits moyens de découpe (31) et ainsi couper ledit film (11) ayant ladite première compliance et ladite deuxième compliance.

2. Le dispositif logistique (1) selon la revendication 1, dans lequel, en fonction de ladite acquisition, ladite unité de contrôle définit, pour ladite palette (10), une reconstruction nominale et au moins une reconstruction probable; et dans lequel ladite unité de contrôle définit ledit mouvement et ladite compliance dudit manipulateur (3) en fonction de la différence entre lesdites reconstructions.

3. Le dispositif logistique (1) selon au moins une revendication précédente, dans lequel ladite unité de contrôle définit, pour lesdits moyens de découpe (31), une trajectoire de découpe sensiblement parallèle à ladite palette (10), une première compliance dans une direction sensiblement parallèle à ladite trajectoire de découpe et une deuxième compliance dans ladite direction sensiblement perpendiculaire à ladite trajectoire de découpe et à ladite palette (10).

4. Le dispositif logistique (1) selon la revendication précédente, dans lequel ladite unité de contrôle définit ladite deuxième compliance en fonction de la différence entre lesdites reconstructions dans une direction sensiblement perpendiculaire à ladite trajectoire de découpe et à ladite palette (10).

5. Le dispositif logistique (1) selon au moins une revendication précédente, dans lequel ledit appareil d'acquisition (2) est un appareil d'acquisition optique.

6. Méthode logistique utilisée avec un dispositif logistique (1) selon au moins une revendication précédente et **caractérisée en ce qu'elle comprend**
- une étape de détection pour détecter ladite palette (10), dans laquelle ledit appareil d'acquisition (2) effectue une acquisition de ladite palette (10) et ladite unité de contrôle définit la position et la taille de ladite palette (10) et puis effectue une reconstruction de ladite palette (10);
- une étape d'identification, dans laquelle la position dudit film (11) est définie dans ladite reconstruction;
- une étape de planification, dans laquelle, en fonction de ladite position et de ladite reconstruction dudit film et de ladite position dudit film (11) dans ladite reconstruction, ladite unité de contrôle définit une trajectoire de découpe, qui est adaptée pour permettre auxdits moyens de découpe (31) de couper ledit film (11);
- une étape de découpe, dans laquelle lesdits moyens de découpe (31) sont déplacés le long de ladite trajectoire de découpe
et **en ce que**
- dans ladite étape de planification, ladite unité de contrôle définit, pour lesdits moyens de découpe (31), une première compliance dans une direction sensiblement parallèle à ladite trajectoire de découpe et une deuxième compliance dans ladite direction sensiblement perpendiculaire à ladite trajectoire de découpe; ladite deuxième compliance est sensiblement plus grande que ladite première compliance de manière à couper ledit film (11) sans endommager ledit produit (12); et
- dans ladite étape de découpe, dans laquelle ladite unité de contrôle commande ledit manipulateur (3) pour déplacer lesdits moyens de découpe (31) et ainsi couper ledit film (11) ayant ladite première compliance et ladite deuxième compliance.

7. La méthode logistique selon la revendication précédente, dans laquelle la fonction de variation de la compliance desdits moyens de découpe (31) le long de ladite trajectoire de découpe est définie dans ladite étape de planification; et dans laquelle ladite étape de découpe est adaptée pour permettre auxdits moyens de découpe (31) de couper ledit film (11).

8. La méthode logistique selon au moins une des revendications 7-8, dans laquelle une reconstruction nominale et au moins une reconstruction probable de ladite palette (10) est définie dans ladite étape de détection en fonction de ladite acquisition.

9. La méthode logistique selon la revendication précédente, dans laquelle une première compliance est définie dans ladite étape de planification dans une direction sensiblement parallèle à ladite trajectoire de découpe et une deuxième compliance dans une direction sensiblement perpendiculaire à ladite trajectoire de découpe et à ladite palette (10); et dans laquelle ladite deuxième compliance dépend de la différence entre lesdites reconstructions dans ladite direction sensiblement perpendiculaire à ladite trajectoire de découpe et à ladite palette (10).
